# EUROPEAN PATENT APPLICATION

(11) **EP 1 033 295 A2**
(43) Date of publication of application: **06.09.2000**
(21) Application number: 00301131.9
(22) Date of filing: 15.02.2000
(51) Int. Cl.: B60S 1/04, B60S 1/34

(54) **Windscreen wiper assembly**

(30) Priority: 03.03.1999 GB 9904820; 24.03.1999 GB 9906755; 23.09.1999 GB 9922420
(71) Applicant: Trico Products (Dunstable) Limited, Dunstable, Bedfordshire SG7 5NT (GB)
(72) Inventor: Hopkins, Roy, Dunstable, Bedfordshire LU6 3BT (GB)
(74) Representative: Britter, Keith Palmer

(57) **Abstract**

A windscreen wiper assembly 1 comprising a pivot shaft 2 mounted in a housing 3 and a safety system comprising means 4, 5, 7 arranged to allow movement of at least the pivot shaft 2 upon application of an impacting force having a component acting along the axis of the pivot shaft 2.

## Description

This invention relates to a windscreen wiper assembly for vehicles with a safety system incorporated therein.

Over the past twenty or so years the amount of legislation directed to increasing the safety of vehicle passengers during an accident has increased greatly. It is now incumbent upon manufacturers to provide, for example, crumple zones and the like to maintain cabin integrity in the case of a collision of a vehicle with another vehicle or wall, for example.

Over the past few years a series of tests have been embarked upon to elucidate the problems of vehicular collisions with pedestrians. Statistics are now published which show the likelihood of injury to a pedestrian when struck by a vehicle travelling at a certain velocity. Indeed, information is being compiled as to what particular types of injury will be incurred, by a pedestrian, in certain types of collisions, with certain types of vehicle. For example it is known that a 16 km/h (10 m.p.h) increase in speed, from 32 to 48 km/h (20 to 30 m.p.h), can greatly reduce a pedestrians likelihood of surviving an impact by a vehicle.

In the light of such data a new series of legislation is being embarked upon which will aim to improve the chances of a pedestrian surviving an impact with a vehicle.

In windscreen wiper assemblies the wiper blades are mounted on wiper arms. These are, in turn, mounted on arm heads which are attached to pivot shafts. Normally the pivot shaft is drivingly operated by a motor in order that it may impart reciprocating motion in the wiper blades and thereby clean the windscreen. The other pivot shaft may either be configured as a slave, that is, it follows the action of the driven shaft, or it may also be driven via a split drive.

However, in conventional windscreen wiper assemblies, the shafts project above what is known as the impact line. This so-called impact line is a plane which defines how close an object may come to the vehicle during a collision. Thus, if the shafts project above the impact line they provide a potential injury liability.

Indeed, under proposed European Parliament legislation relating to the protection of pedestrians and other road users in the event of a collision with a motor vehicle, manufacturers will have to ensure that the pivot shafts of wiper assemblies will not provide "spearing" hazards. This will be checked in controlled, laboratory conditions by shooting a rubber covered steel ball at a mounted assembly at 40 km/h. This is intended to simulate a collision of a head with an assembly.

The conventional wiper assembly will undoubtedly fail this test as the shafts are rigidly, and unmovingly, mounted inside the vehicle. This has been a prerequisite as the forces exerted by the motion of the components of the assembly are large, and this can affect the stability of the vehicle.

A solution to the above-identified problem has been proposed in GB-A-2327598 (HONDA), which provides a windscreen wiper assembly comprising a pivot shaft mounted within a housing. The housing is attached to the car body by or at a frangible portion which, upon application of a load in the axial direction of the pivot, breaks, allowing movement of the shaft and housing toward the inside of the car body.

Whilst HONDA provides a means to reduce the "spearing hazard" of the pivot shaft, it is only responsive to an impacting force which is applied along the axis of the shaft. In real situations the impacting force may not act along that axis and consequently it is desirable, and indeed necessary, to provide a windscreen wiper assembly which is responsive to forces which do not act along that axis.

Therefore, the present invention seeks to obviate the problems of the known prior art assembly by providing a safety system which will satisfy the requirements of the proposed legislation whilst not affecting the performance of the vehicle or indeed the wiper assembly.

According to a first aspect of the invention there is provided a windscreen wiper assembly comprising a pivot shaft mounted in a housing and a safety system comprising means arranged to allow movement of at least the pivot shaft upon application of an impacting force having a component acting along the axis of the pivot shaft.

Preferably the assembly further comprises a housing mount which supports the housing and a bracket, wherein the bracket is attached to the housing mount and, in use, to a vehicle.

The safety system may also comprise at least one frangible portion.

If the housing mount is circumferentially disposed about the housing then the frangible portion may be situated between the housing and the housing mount.

The housing may be provided with an annular groove and the housing mount may be provided also with an annular groove, with the frangible portion, preferably in the form of a ring, located therein.

The housing and its mount may each have a pair of axially displaced annular grooves, which are mated and contain the frangible portions, such as frangible rings.

The frangible portions may be plastics mouldings.

The annular groove of the housing mount can be axially elongate and disposed about the annular groove of the housing, the entirety of both grooves being filled with a release moulding which comprises the frangible portion.

The frangible portion can provide a structural connection between the housing mount and the bracket.

The housing mount may comprise a resilient mounting through which it is connected to the housing.

The frangible portion preferably comprises a shear peg connecting the housing mount and the bracket, or a shear bolt connecting the housing mount and the bracket.

Alternatively or additionally, the frangible portion may comprise a nut and bolt with a shear portion.

The frangible portion may also provide a structural connection between the housing and housing mount and it may comprise a shear peg or a pair of shear pegs.

Furthermore the housing mount may be connected to the bracket via a resilient mounting and the housing may comprise a spigot disposed perpendicularly with respect to the axis of the shaft. The spigot may be formed as a plate upon which the at least one frangible portion is mounted.

The safety system may comprise resilient means which may constitute at least part of the housing mount.

Further the housing may comprise a spigot disposed perpendicularly with respect to the axis of the shaft, the spigot comprising an annularly-disposed resilient grommet.

The resilient means may comprise an inverted U-clip having flexible legs which resiliently hold the grommet about the spigot.

Alternatively or additionally, said resilient means may be disposed between the housing mount and the shaft housing.

The housing can be provided with an annular groove and the mount may be provided also with an annular groove to mate with that of the housing.

The annular groove of the housing or mount may contain an O-ring disposed similarly in the mating annular grooves.

Said resilient means can be disposed between the shaft and its housing and may be mounted in the housing to restrain resiliently the shaft therein.

Alternatively or additionally, said resilient means can comprise a snap expansion circlip.

The means for allowing movement of the pivot shaft upon impact may be graduated or gradual, whereby such movement is gradually decelerated. Such an arrangement may be incorporated in one or more of the corresponding components of the safety system.

That means for allowing movement of at least the pivot shaft may be arranged to allow movement of substantially the whole of the assembly when fitted to an associated vehicle.

According to a second aspect of the invention there is provided a windscreen wiper assembly comprising a pivot shaft mounted or mountable below an impact line of which transgression would otherwise result in impact with the at least one shaft.

Embodiments of the invention will now be described by way of example and with reference to the accompanying drawings in which:
Figure 1 is a side elevation of part of a first embodiment of windscreen wiper assembly;
Figure 1A is a view along section A-A of Figure 1;
Figure 2 is a side elevation of part of a second embodiment of windscreen wiper assembly;
Figure 3 is a side elevation of part of a third embodiment of windscreen wiper assembly;.
Figure 3A is a view of a detail of Figure 3;
Figure 4 is a side elevation of part of a fourth embodiment of windscreen wiper assembly;
Figure 5 is a side elevation of part of a fifth embodiment of windscreen wiper assembly;
Figure 6 is a side elevation of part of a sixth embodiment of windscreen wiper assembly;
Figure 7 is a side elevation of part of a seventh embodiment of windscreen wiper assembly;
Figure 8 is a side elevation of part of an eighth embodiment of windscreen wiper assembly;
Figure 8A is a plan view of a component shown in Figure 8;
Figure 9 is a side elevation of part of a ninth embodiment of windscreen wiper assembly;
Figure 10 is a side elevation of part of a tenth embodiment of windscreen wiper assembly; and
Figure 10A is a view along section A-A of Figure 10.

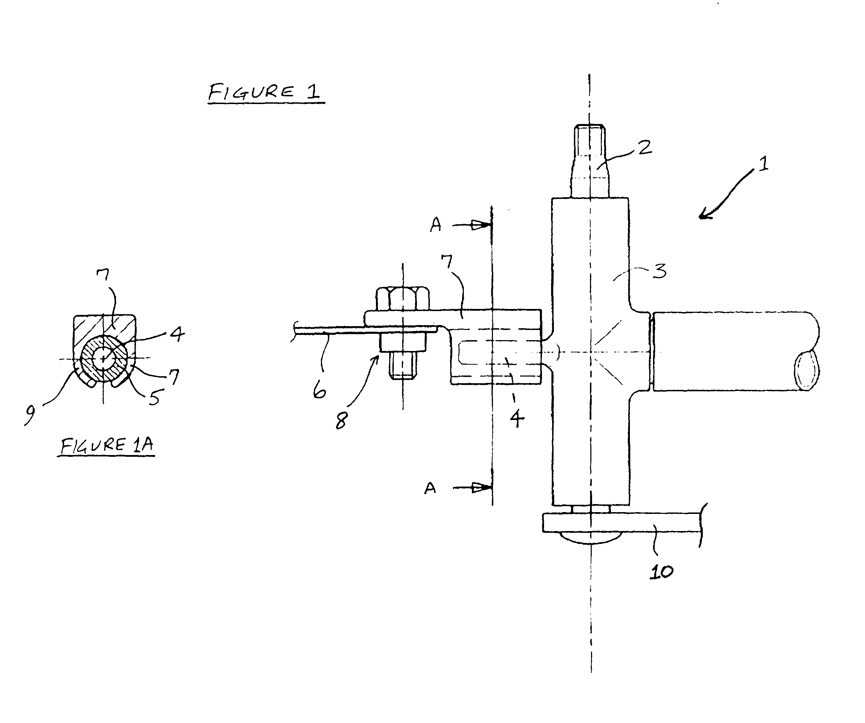

Referring to Figure 1, part of a windscreen wiper assembly 1 comprising a pivot shaft 2 mounted in a housing 3 and arranged to rotate reciprocably about its longitudinal axis to impart reciprocating motion to the windscreen wiper arm and blade (not shown). This reciprocating motion is imparted to the pivot shaft 2 by a cam shaft 10 operatively connected to a drive motor (not shown).

The housing 3 is provided with a spigot 4 perpendicular to the longitudinal axis of the housing 3. As shown in Figure 1A the spigot 4 has a cicumferential rubber grommet 5 disposed thereon.

Also shown in Figure 1 is a vehicle bracket 6 which is attached to the associated vehicle and acts to locate the assembly 1 within a vehicle. The bracket 6 is connected to a housing mount 7 by a nut and bolt 8. The housing mount 7 is an inverted U-clip provided with flexible or resilient legs 9.

In use, the spigot 4 with the grommet 5 mounted thereon, is resiliently held by the legs 9 of the mount 7 which is rigidly mounted in the vehicle, by virtue of the nut and bolt 8 and the vehicle bracket 6.

Following an impact between an object and the end of the pivot shaft 2, the shaft 2 and housing 3 are urged downwardly. As the mount 7 is rigidly held in place, the downward motion of the shaft 2 and housing 3 urges the flexible legs 9 apart. Eventually, the elastic limit of the legs 9 and grommet 5 will be surpassed and the legs 9 will yield. As the legs 9 yield, the shaft 2 and housing 3 continue their downward movement.

Therefore, when an object impacts on the end of the pivot shaft 2, the safety system allows the assembly to "give" under the impact and thereby avoids presenting a rigid, potentially lethal, shaft 2 to the impacting object.

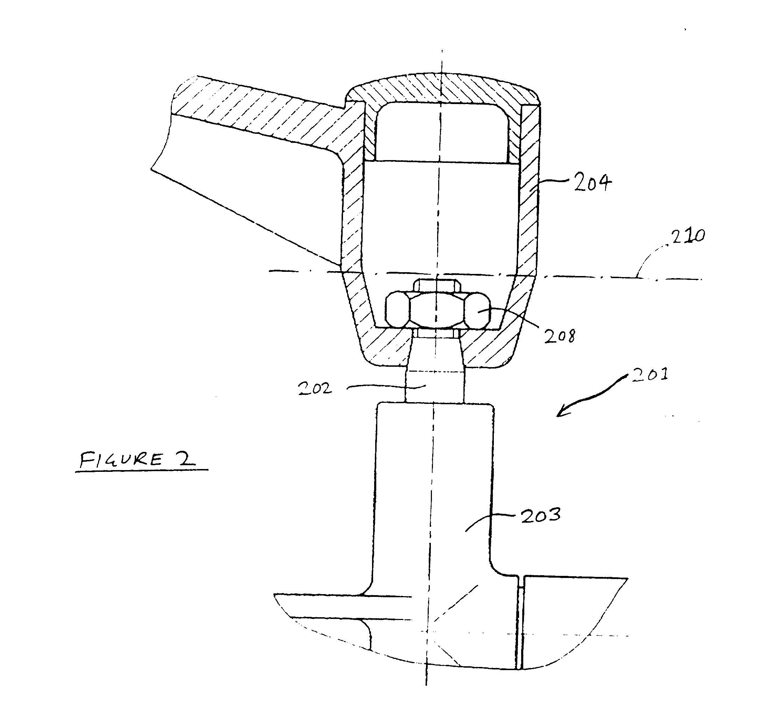

Figure 2 shows part of another windscreen wiper assembly 201 wherein a pivot shaft 202 is mounted in a pivot housing 203. The shaft 202 is of such a configuration that its top end lies below an impact line 210.

The top end of the shaft 202 is attached to a wiper arm head 204 by a nut 208. On impact of an object, the relatively "soft" wiper arm head 204 will be crushed. However, an object will not be able to impact on the top end of the shaft 202 as it is mounted below the line 210. Thus, the object is protected from an impact with the shaft 202

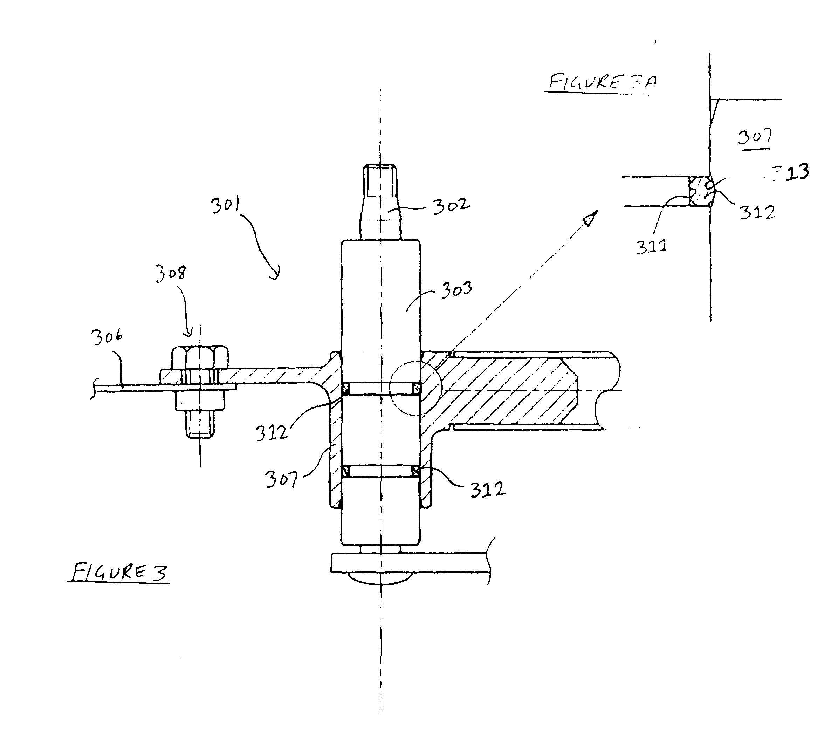

Figure 3 shows part of a third embodiment of windscreen wiper assembly 301 wherein a pivot shaft 302 is mounted inside a pivot housing 303. A housing mount 307 is circumferentially disposed about the housing 303 and is in turn rigidly mounted on a vehicle bracket 306 by virtue of the nut and bolt 308.

The housing 303 is provided with two annular grooves 311 axially displaced from each other. Seated in each groove 311 is an O-ring 312. Along the inner periphery of the housing mount 307 are provided two longitudinally displaced annular grooves 313 (shown in Figure 3A) which mate with the grooves 311 when the mount 307 and housing 303 are assembled. The O-rings 312, therefore, are seated in both sets of grooves 311, 313 and thereby provide a resilient mounting for the housing 303 in the housing mount 307.

Upon an impact of an object with the top end of shaft 302, the shaft and, therefore, the housing 303 are urged downwardly with respect to the mounting 307. If the force of the impact is sufficient to overcome the resilience of the system imparted to it through the O-rings 312, then the shaft 302 and housing 303 will continue their downward motion.

The resilience of the system will act to cushion the impact an object has with the top end of the shaft 302 and thereby reduce the possibility of injury.

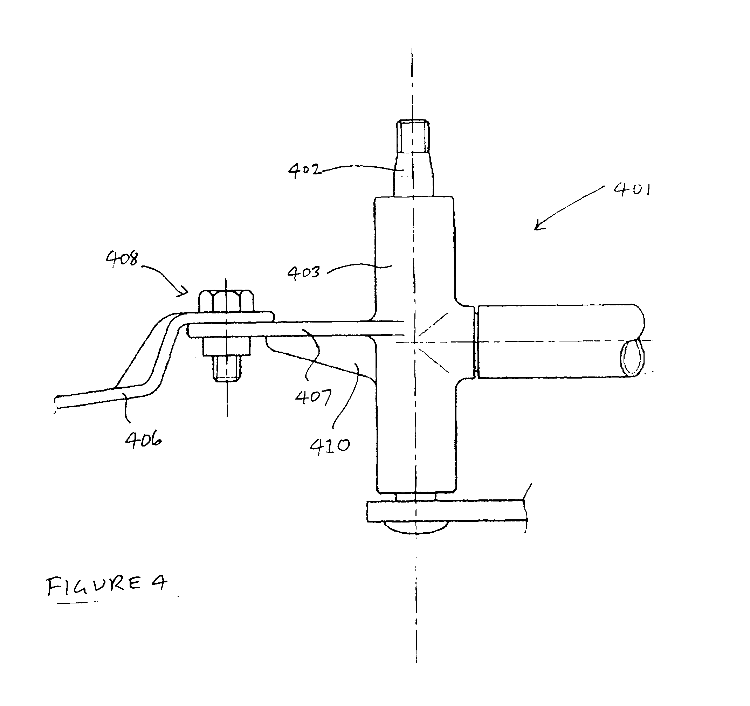

Figure 4 shows a similar embodiment of wiper system 401 wherein a shaft 402 is mounted in a housing 403. A housing mount 407, which is integrally formed with the housing 403, is further provided with an integral support fin 410.

The housing mount 407 is connected to the vehicle bracket 406 by a nut and bolt 408. The nut and bolt 408 are provided with a shear portion, which may be the thread, the shank or the block.

Thus, in an impact of an object with the top end of the shaft 402, the shaft 402 and housing 403 are urged downwardly with respect to the bracket 406. If the force of the impact is above a predetermined value, the shear portion of the nut and/or bolt 408 will shear. This will allow the shaft 402, housing 403, and the housing mount 407 to continue their downward motion.

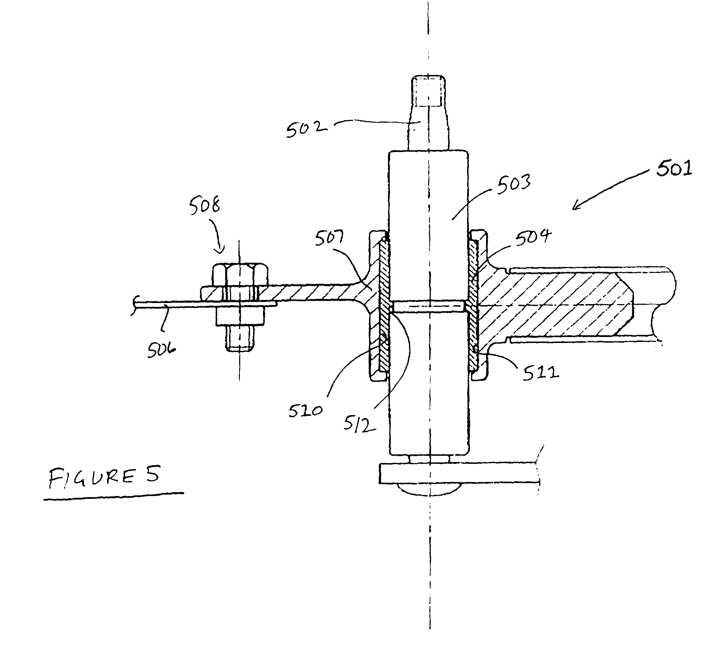

Figure 5 shows part of another embodiment of windscreen wiper assembly 501. A pivot shaft 502 is mounted in a pivot housing 503 which is mounted in a circular bore 510 of housing mount 507 which is, in turn, rigidly mounted, by virtue of a nut and bolt 508, to a vehicle bracket 506.

The housing mount 507 is provided with an elongate annular groove 511 on the inside periphery of the circular bore 510. The housing 503 is also provided with an annular groove 512 which is centred, after assembly, on the elongate groove 511 of the housing mount 507. The cavity 513 defined by the two grooves 511, 512 is filled with a release-moulding compound 504, such as a plastics material.

Thus, upon impact between an object and the top end of shaft 502, the shaft and housing 503 are urged downwardly with respect to the vehicle bracket 506. At a predetermined force, the release moulding 504 will break. This will allow the shaft 502 and housing 503 to continue on their downward movement.

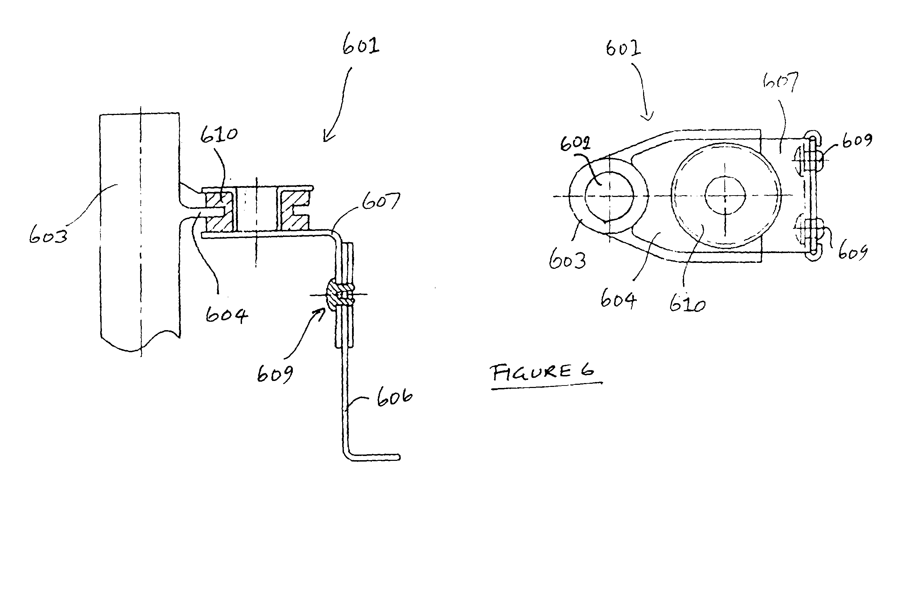

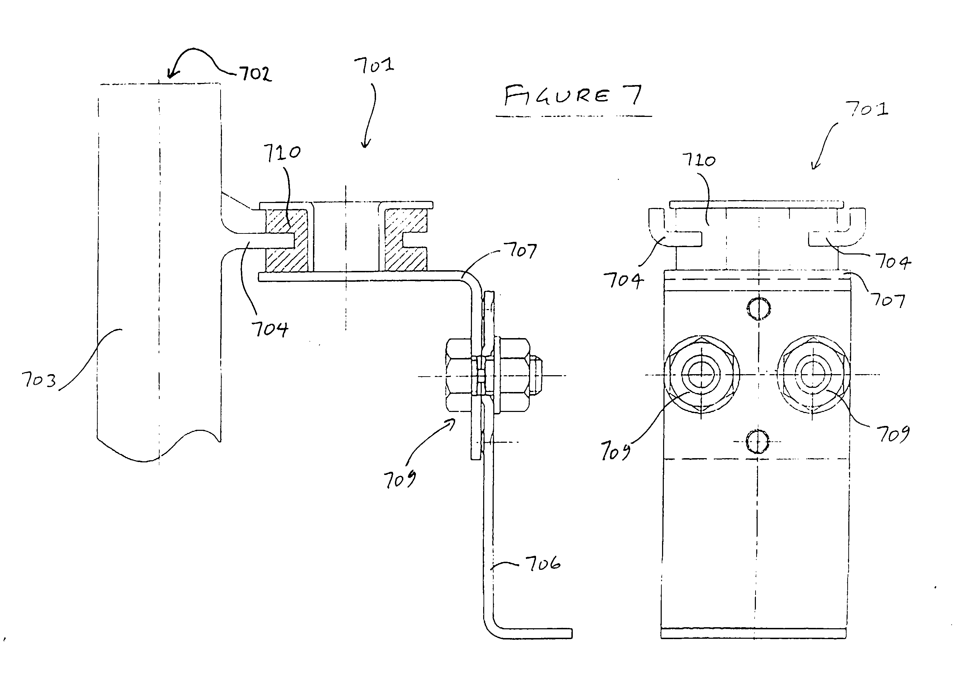

Now turning to Figures 6 and 7, a pivot shaft housing 603 and 703 is shown, in which a respective pivot shaft 602, 702 is mounted. A shaft housing 603, 703 is provided with a spigot 604, 704 which is attached to a resilient mounting means 610, 710 of a housing mount 607, 707. The mounting means 610, 710 provides means to introduce an amount of flexibility into the assembly 601, 701.

The housing mount 607, 707 is attached to the vehicle bracket 606, 706 by a frangible body. In the assembly shown in Figure 6 the frangible body is two shear pegs 609 and in that shown in Figure 7 it is two shear bolts 709.

Therefore, in both these cases, an impact with the top end of the shaft 602, 702 will urge the shaft 602, 702 and housing 603, 703 downwardly with respect to the vehicle bracket 606, 706. Any minor impacts will be absorbed by the resilient mounting means 610, 710. However, any impact in which a force above a predetermined level is imparted to the system, will cause the frangible portion, either shear pegs 609 or shear bolts 709, to break. This will therefore, allow the shaft 602, 702 and housing 603, 703 to continue on their downward path.

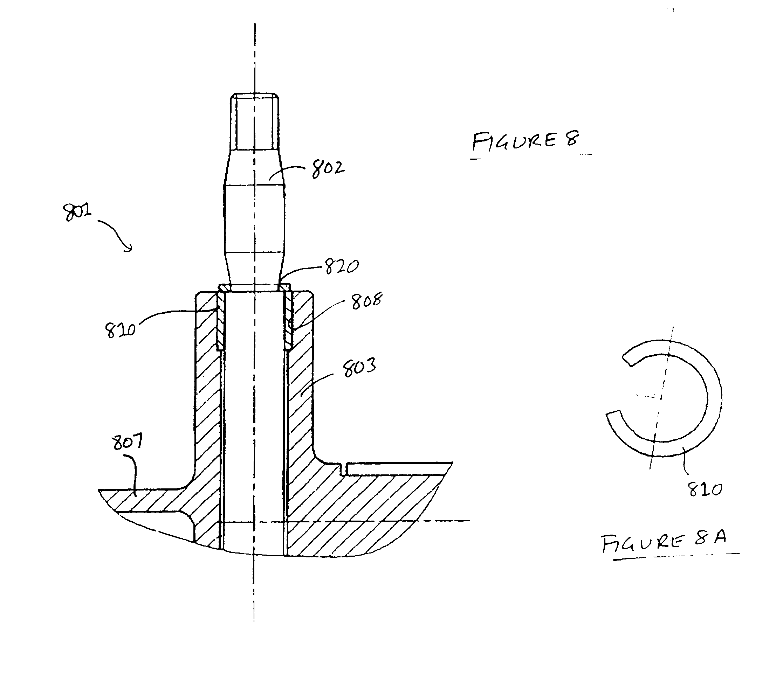

In Figure 8, a further embodiment of windscreen wiper assembly 801 is shown. The pivot shaft 802 is mounted in a shaft housing 803 and is mounted on a housing mount (807), which is, in turn, attached to the vehicle bracket (not shown).

The tubular interior of the housing 803 is provided with an enlarged portion 808 in which is retained the body of a snap expansion circlip 810 which is shown in plan in Figure 8A. The circlip 810 resiliently holds the pivot shaft 802 in place due to the circlip 810 having a diameter, when relaxed, smaller than the diameter of a tapered portion 820 of the pivot shaft 802.

Thus, during an impact between an object and the top end of the pivot shaft 802, the circlip 810 holds the shaft 802 in place until a force has been imparted which overcomes the clamping strength of the circlip 810. As the clamping strength of circlip 810 is overcome, it yields and the pivot shaft 802 moves downwardly with respect to the housing 803.

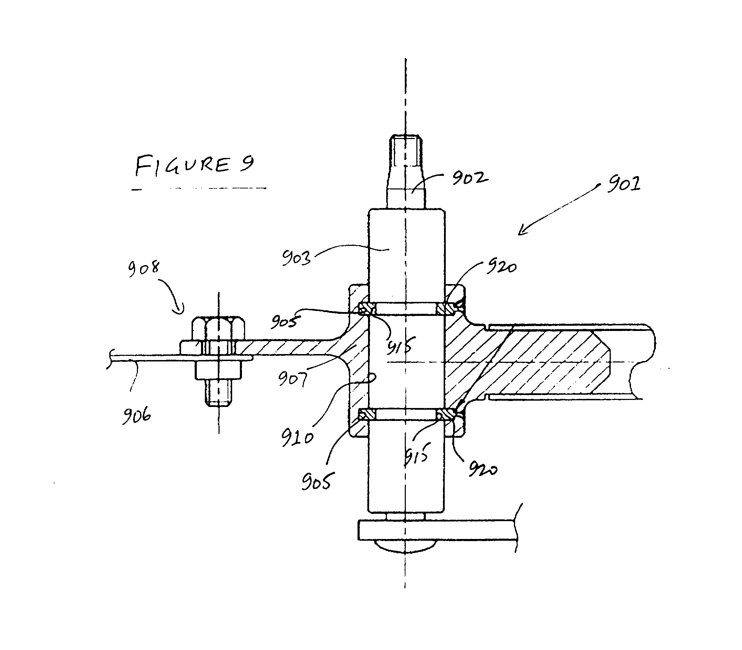

In Figure 9, system 901 similar to that of Figure 5 is shown. The pivot shaft 902 is mounted in a housing 903 which is mounted in a circular through-bore 910 of a housing mount 907 attached to a vehicle bracket 906 by virtue of a nut and bolt 908.

The housing mount 907 is provided with a pair of axially spaced annular grooves 905 along the inner periphery of the bore 910. The housing 903 is similarly provided with a pair of annular grooves 915 axially spaced on its outer periphery. The grooves 905, 915 are so arranged that, upon assembly, two pairs of mating grooves are formed.

The pairs of mating grooves 905, 915 are filled with shear release mouldings 920 which are frangible such that upon impact, that is above a predetermined force, between an object and the top end of the pivot shaft 902, the shear release mouldings 920 will break and allow a downward motion of the shaft 902 and housing 903.

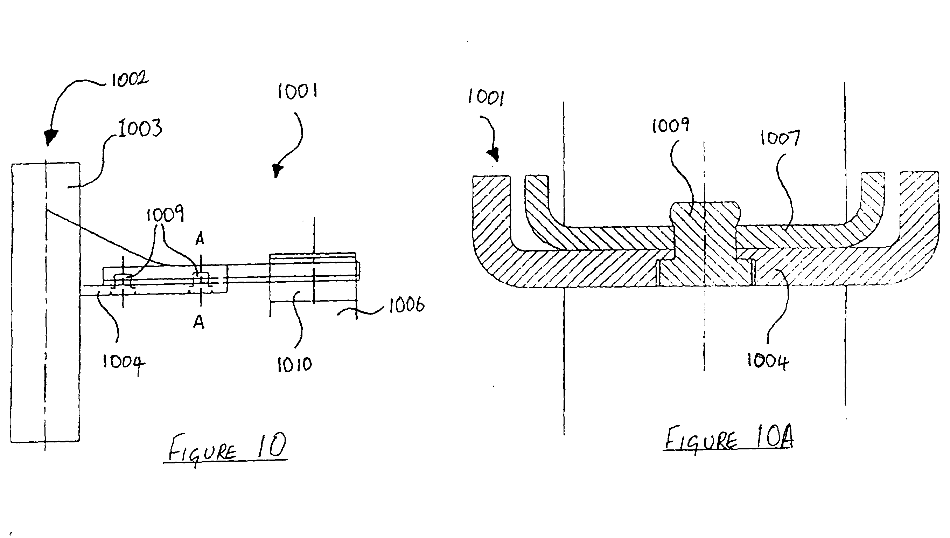

Referring to Figures 10 and 10A, part of a windscreen wiper assembly 1001 comprises a pivot shaft 1002 mounted in a pivot shaft housing 1003 and arranged to rotate reciprocably about its longitudinal axis to impart reciprocating motion to the wiper arm and blade (not shown).

The housing 1003 is provided with a plate or spigot 1004 mounted perpendicularly to the longitudinal axis of the housing and is connected to a housing mount 1007 by a frangible body 1009 such as a pair of shear pegs.

The housing mount 1007 is further provided with a resilient mounting means 1010, through which it is connected to a vehicle bracket 1006 and consequently to the associated vehicle.

Following an impact between an object and the end of the pivot shaft 1002, the shaft 1002 and housing 1003 are urged downwardly. The resilient mounting means 1010 will absorb a certain amount of downward motion such as that imparted by a minor impact. However, any impact in which an applied impacting force of at least a predetermined level is imparted to the system will cause the frangible portion, such as the shear pegs 1009 to break. This will therefore, allow the shaft 1002 and housing 1003 to continue their downward path.

The above descriptions are given as examples only and are not limiting on the scope of the invention. For example, the invention also allows for the shaft and/or the housing to be piston mounted. The piston may be hydraulic or pneumatic and provide means to absorb the energy from an impact whilst allowing the shaft to travel downwardly and below the impact line. Furthermore, the linkage between vehicle bracket and housing mount could also be provided with a piston, for example.

Furthermore, any, or each, of the embodiments of inventive safety system may be mounted on a wiper assembly with any of the other safety systems such that, for example, an assembly may be provided with a frangible portion connecting the housing mount and bracket and a frangible portion between the shaft and the shaft housing.

It should be noted that the assemblies detailed above may also be applied to vehicles in which two pivot shafts are present. In such a case, the safety assembly may be associated with both of the shafts. Therefore, either one of the above assemblies will be sufficient to remove both shafts to below the impact line, or each shaft will have an associated safety mechanism.

## Claims

1. A windscreen wiper assembly (1; 301; 401; 501; 601; 701; 801; 901; 1001) comprising a pivot shaft (2; 302; 402; 502; 602; 702; 802; 902; 1002) mounted in a housing (3; 303; 403; 503; 603; 703; 803; 903; 1003) and a safety system comprising means arranged to allow movement of at least the pivot shaft (2; 302; 402; 502; 602; 702; 802; 902; 1002) upon application of an impacting force having a component acting along the axis of the pivot shaft (2; 302; 402; 502; 602; 702; 802; 902; 1002).

2. An assembly (1; 301; 401; 501; 601; 701; 801; 901; 1001) according to claim 1 further comprising a housing mount (7; 307; 407; 507; 607; 707; 807; 907; 1007) which supports the housing (3; 303; 403; 503; 603; 703; 803; 903; 1003) and a bracket (6; 306; 406; 506; 606; 706; 906; 1006), wherein the bracket (6; 306; 406; 506; 606; 706; 906; 1006) is connected to the housing mount (7; 307; 407; 507; 607; 707; 807; 907; 1007) and, in use, to a vehicle.

3. An assembly (401; 501; 601; 701; 901; 1001) according to claim 1 or 2, wherein said means comprises at least one frangible portion (408; 504; 609; 709; 920; 1009).

4. An assembly (501; 901) according to claim 3, wherein the housing mount (507; 907) is circumferentially disposed about the housing and each of which (503, 507; 903, 907) comprises an annular groove (511, 512; 905, 915), the at least one frangible portion (504; 920) being situated between the housing (503; 903) and the housing mount (507; 907) and located in at least one of the annular grooves (511, 512; 905, 915).

5. An assembly (501; 901) according to claim 4, wherein the at least one frangible (504; 920) portion is an annulus.

6. An assembly (901) according to claim 4 or 5, wherein the housing (903) and the housing mount (907) each has a pair of axially displaced annular grooves (905, 915), which corresponding grooves (905, 915) are mated and contain frangible portions (920).

7. An assembly (501) according to claim 4 or 5, wherein the annular groove (511) of the housing mount (507) is axially elongate and disposed about the annular groove (512) of the housing (503), the entirety of both grooves (511, 512) being filled with a release moulding which comprises the frangible portion (504).

8. An assembly (501; 901) according to any of claims 4 to 7, wherein the at least one frangible portion (504; 920) is a plastics material.

9. An assembly (401; 601; 701) according to claim 3, wherein the at least one frangible portion (408; 609; 709) comprises a structural connection between the housing mount (407; 607; 707) and the bracket (406; 606; 706).

10. An assembly (601; 701) according to claim 1, 2, 3 or 9, wherein the housing mount (607; 707) comprises a resilient mounting (610; 710) through which it is connected to the housing (603; 703).

11. An assembly (601) according to claim 9, or claim 10 when dependent upon either claim 3 or claim 9, wherein the at least one frangible portion (609) comprises at least one, and preferably a pair of shear pegs.

12. An assembly (701) according to claim 9 or claim 10 when dependent upon either claim 3 or claim 9, wherein the at least one frangible portion (709) comprises a shear bolt.

13. An assembly (401) according to any of claims 1, 2, 3 and 9, wherein the housing mount (407) is integrally formed with the housing (403) and the at least one frangible portion (408) comprises a nut and bolt with a shear portion.

14. An assembly (1001) according to claim 3, wherein the at least one frangible portion (1009) provides a structural connection between the housing (1003) and housing mount (1007).

15. An assembly (1001) according to any of claims 1 to 3 and 14, wherein the housing mount (1007) is connected to the bracket (1006) via a resilient mounting (1010).

16. An assembly (1001) according to claim 14 or claim 15 when dependent upon claim 14, wherein the housing (1003) comprises a spigot (1004) disposed perpendicularly with respect to the axis of the shaft (1002), and upon which the at least one frangible portion (1009) is mounted.

17. An assembly (1001) according to any of claims 14 to 16, wherein the at least one frangible portion (1009) is a shear peg.

18. An assembly (1; 301; 801) according to claim 2, wherein said means comprises resilient means (9; 312; 810).

19. An assembly (1) according to claim 18, wherein at least a part of said resilient means (9) constitutes at least a portion of the housing mount (7).

20. An assembly (1) according to claim 18 or 19, wherein the housing (7) comprises a spigot (4) disposed perpendicularly with respect to the axis of the shaft (2), and the spigot (4) comprises an annularly-disposed resilient grommet (5).

21. An assembly (1) according to any of claims 18 to 20, wherein said resilient means (9) comprises an inverted U-clip having flexible legs with the grommet (5) located therebetween.

22. An assembly (301) according to claim 18, wherein said resilient means (312) is disposed between the housing mount (307) and the shaft housing (303).

23. An assembly (301) according to claim 22, wherein the housing (303) and the mount (307) each comprise at least one annular groove (311, 313), the at least one respective groove (311, 313) of each being in mating or confronting relationship.

24. An assembly (301) according to claim 23, wherein said resilient means (312) comprises at least one O-ring, the or each of which being located in respective mating annular grooves (311, 313).

25. An assembly (801) according to claim 18, wherein said resilient means (810) is disposed between the shaft (802) and its housing (803).

26. An assembly (801) according to claim 25, wherein said resilient means (810) is mounted in the housing (803) to restrain resiliently the shaft (802) therein, and which comprises a snap expansion circlip.

27. An assembly (1; 301; 401; 501; 601; 701; 801; 901; 1001) according to any preceding claim, wherein said means for allowing movement of at least the pivot shaft upon impact may be graduated or gradual, whereby such movement is gradually decelerated.

28. An assembly (1; 301; 401; 501; 601; 701; 801; 901; 1001) according to any preceding claim, wherein said means for allowing movement of at least the pivot shaft (2; 302; 402; 502; 602; 702; 802; 902; 1002) upon impact, is arranged to allow movement of substantially the whole of the assembly (1; 301; 401; 501; 601; 701; 801; 901; 1001).

29. A windscreen wiper assembly (201) comprising a pivot shaft (202) mounted or mountable below an impact line (210), of which transgression would otherwise result in impact with the at least one shaft (202).
